Europäisches Patentamt

European Patent Office

Office européen des brevets

(19)

(11) Veröffentlichungsnummer: **0 265 557**
**B1**

(12) **EUROPÄISCHE PATENTSCHRIFT**

(45) Veröffentlichungstag der Patentschrift: **07.11.90**

(21) Anmeldenummer: **86115877.2**

(22) Anmeldetag: **15.11.86**

(51) Int. Cl.⁵: **G 04 B 37/22**, **G 04 B 47/06**, **G 04 B 37/00**, **G 01 D 11/24**, **G 01 W 1/04**

(54) **Messinstrument mit Gehäuse sowie Herstellungsverfahren.**

(30) Priorität: **18.10.86 DE 3635529**

(43) Veröffentlichungstag der Anmeldung:
**04.05.88 Patentblatt 88/18**

(45) Bekanntmachung des Hinweises auf die Patenterteilung:
**07.11.90 Patentblatt 90/45**

(84) Benannte Vertragsstaaten:
**AT BE CH DE FR GB IT LI LU NL SE**

(56) Entgegenhaltungen:
**CH-A- 311 296**
**DE-U-7 920 586**
**DE-U-8 229 098**
**FR-A- 114 459**
**FR-A- 444 359**
**FR-A-2 508 666**
**US-A-1 832 359**
**US-A-3 753 117**

(73) Patentinhaber: **Wehrle Uhrenfabrik GmbH**
**Rathaussteige 2 - 4**
**D-7741 Schönwald Schwarzwald (DE)**

(72) Erfinder: **Wehrle, Peter F.**
**Schubertstrasse 34**
**D-7741 Schönwald (DE)**

(74) Vertreter: **Schmitt, Hans, Dipl.-Ing. et al**
**Patentanwälte Dipl.-Ing H. Schmitt Dipl.-Ing. W. Maucher Dreikönigstrasse 13**
**D-7800 Freiburg (DE)**

Courier Press, Leamington Spa, England.

**Beschreibung**

Die Erfindung betrifft ein Meßinstrument, insbesondere zur Messung von Zeit, Luftdruck, Luftfeuchtigkeit und/oder Temperatur mit einem Gehäuse und zumindest einer Anzeigefläche und/oder Zifferblatt und zumindest einem z.B. aus einem Uhrwerk bestehenden Meßwerk, welches an der der Anzeigefläche bzw. dem Zifferblatt abgewandten Gehäuserückseite vorzugsweise für das Einstellen des Meßwerkes oder eines hiervon gesteuerten Zusatzgerätes, insbesondere eines Warn- oder sonstigen sekundären Anzeigegerätes, wie z.B. eines Weckerwerkes, oder für dergleichen Betätigungen zugänglich ist.

Solche Meßinstrumente gibt es seit langem in vielerlei Ausführungen. Es handelt sich dabei insbesondere um Uhren oder um sogenannte Wettermeßstationen, die oft als Teil einer Wohnungsinneneinrichtung neben ihrem technischen Zweck auch Zierfunktion haben. Sie werden zumeist in Serienfertigung hergestellt, seltener auch als handgefertigte Einzelexemplare.

Die Einzelanfertigung, die eine individuelle, ästhetische Formgebung ermöglicht und damit den Zier- oder Dekorationswert erhöht, ist jedoch sehr teuer.

Aus DE—U—79 20 586 ist eine Standuhr bekannt, deren Gehäuse aus Naturstein besteht, wobei dieser auf eine ebene Grundplatte reduziert ist, was eine entsprechende Bearbeitung des Natursteines voraussetzt.

Aus der FR—A—444 359 ist eine Pendeluhr bekannt, deren Gehäuse aus hochwertigem Stein besteht, dessen Inneres ausgehöhlt ist und dessen Außenseite ebenfalls bearbeitet ist. Auch ein solches Gehäuse ist aufwendig und teuer.

Aus DE—U—82 29 098 ist eine Uhr mit Gehäuse bekannt, in das Mittels einer Halteplatte oder Platine aus Holz, Glas, Metall, Keramik, Halbedelstein, Marmor od.dgl. ein Uhrwerk eingesetzt ist. Das Gehäuse selbst hat eine mäßige Form, die nur durch eine entsprechende Bearbeitung erreicht werden kann und dasselbe gilt für die Halteplatte oder Platine.

Aus der CH—A—311 296 ist eine Armbanduhr bekannt, deren Gehäuse aus einer rostfreien antimagnetischen Legierung besteht und welche ein Weckerwerk enthält. Für den Schallaustritt der von dem Wecker erzeugten Geräusche ist eine Abdeckplatte mit Öffnungen versehen.

Die US—A—1 832 359 zeigt eine Uhr, deren Gehäuse aus Holz besteht und ebenfalls nicht nur im Inneren zur Aufnahme des Uhrwerkes sondern auch an der Außenseite einer Bearbeitung bedarf.

Aus der FR—A—2 508 666 kennt man eine Standuhr, deren Gehäuse eine durchgehende Öffnung oder Bohrung zum Einsetzen eines Uhrwerkes mit metallischem und teleskopartig veränderbarem Gehäuse hat. Das Gehäuse hat eine regelmäßige, z.B. dreieckförmige Umrißform und bedarf somit einer entsprechenden Fertigung oder Bearbeitung.

Aus der FR—A—114 459 und der US—A—3 753 117 sind jeweils Gehäuse bekannt, die mehrere Meßinstrumente, beispielsweise Thermometer und Barometer enthalten. Die Gehäuse sind dabei wiederum von regelmäßiger Form und bedürfen einer entsprechend aufwendigen Herstellung und/oder Bearbeitung.

Der Erfindung liegt die Aufgabe zugrunde, ein Meßinstrument der eingangs erwähnten Art zu schaffen, das einen guten Stand hat, ein asthetisch ansprechendes und besonderes Gehäuse aufweist, wobei jedes Gehäuse bzgl. Form, Farbe und Oberflächenstruktur individuell von dem anderen abweicht, wobei aber trotzdem eine Serienfertigung von solchem Meßinstrumenten möglich sein soll.

Die erfindungsgemäße Lösung dieser Aufgabe besteht darin, daß das Gehäuse durch einen auf seiner Außenfläche im wesentlichen unbearbeiteten Naturstein gebildet ist, der zumindest eine durchgehende Gehäusebohrung zur Aufnahme des bzw. der Meßwerke mit Anzeigefläche und/oder Zifferblatt hat.

Durch die Verwendung von auf seiner Außenseite im wesentlichen unbearbeiteten Naturstein ergibt sich eine jeweils originelle, unverwechselbare Verbindung zwischen einem auf natürliche Weise geformten Gehäuse und moderner Technik. Die Natursteine können hierbei serienmäßig durchgehende Bohrungen aufweisen zur Aufnahme von ebenfalls serienmäßig hergestellten Meßwerken. Serienmäßige Fertigung und individuelle Ausgestaltung des jeweiligen Meßgerätes verbinden sich somit in ästhetisch ansprechender Weise. Aufgrund der Serienfertigung sind solche Meßgeräte preisgünstig herstellbar. Die durchgehende Bohrung ermöglicht einen Zugang der Uhr von beiden Seiten, so daß z.B. zur Einstellung einer Uhr oder zum Batteriewechsel das Meßinstrument im Gehäuse verbleiben kann, ohne daß komplizierte Zusatzbohrungen zur Durchführung von Bedienungselementen oder zur Aufnahme einer Batteriehalterung notwendig sind. Als Natursteine kommen vor allem große Kieselsteine in Frage.

Es ist vorteilhaft, wenn die durchgehende Gehäusebohrung abgestuft ist und der im Durchmesser größer Bohrungsbereich das Meßwerk mit der Anzeigefläche und/oder dem Zifferblatt aufnimmt und die Anzeigefläche und/oder das Zifferblatt an der Stufe zu dem Bohrungsbereich mit dem kleineren Durchmesser anliegt.

Das Meßwerk kann so in einfacher Weise von der Rückseite her in das Steingehäuse eingeschoben werden und erhält durch den Anschlag der Anzeigefläche bzw. des Zifferblattes an der Abstufung der Gehäusebohrung festen Halt.

Die Anzeigefläche bzw. das Zifferblatt kann dabei zweckmäßigerweise durch ein Schutzglas geschützt werden, welches in dem vor der Anzeigefläche bzw. dem Zifferblatt befindlichen Bereich in eine umlaufende Nut od. dgl. der Gehäusebohrung eingesetzt wird.

Auf der der Anzeigefläche bzw. dem Zifferblatt abgewandten Bohrungsbereich kann zweckmäßigerweise ein Deckel vorgesehen sein, der zumindest teilweise aus dem bei der Herstellung der durchgehenden Gehäusebohrung anfallenden Bohrkern besteht, wobei vorzugsweise der Teil des Bohrkernes als Deckel verwendet wird, der in diesem Bereich der ursprünglichen Steinoberfläche entspricht.

Damit bleibt auch im Bereich des rückwärtigen Deckels die natürliche Struktur des Steines erhalten. Diese natürliche Form des rückwärtigen Meßwerkverschlusses ist zudem auch unter Herstellungsgesichtspunkten vorteilhaft, weil die zusätzliche Anfertigung eines passenden Deckels aus einem anderen Material unnötig wird. Insbesondere auf Kunststoffprodukte kann im Gehäuseaufbau somit praktisch völlig verzichtet werden. Nicht zuletzt wird damit der Vorteil erreicht, die Produktion von später kaum abbaubaren Abfallprodukten zu vermeiden. Die erfindungsgemäße Uhr verbindet auf diese Weise ein ästhetisches Äußeres mit technischer Zweckmäßigkeit und steht darüberhinaus als Beispiel repräsentativ für eine umweltverträgliche Technikgestaltung.

Zweckmäßigerweise kann zwischen dem Rand des Steindeckels und der Gehäuseborhung ein Ring od. dgl. Öffnung als Schallaustritt für ein Weckerwerk frei bleiben. Hierzu kann das technisch bedingte Spiel zwischen zylindrischer Außenfläche des Bohrkerns und der Bohrung benutzt werden. Dies kann in einfacher Weise geschehen, wenn zur Fixierung des Meßwerkes in der Gehäusebohrung eine Klemmfeder od. dgl. vorgesehen ist, die vorzugsweise auf der der Anzeigefläche bzw. dem Zifferblatt abgewandten Seite verlängert ist und einen Einsatz für den Steindeckel bildet. Durch diese Befestigungsart bleibt zwischen Gehäusebohrung und zylinderischem Rand ein ringförmiger Zwischenraum zwischen der Randfläche des Deckels und der Gehäusebohrung erhalten. Dies gilt insbesondere dann, wenn als Deckel der ursprüngliche Bohrkern verwendet wird, der notwendigerweise einen geringeren Durchmesser aufweist als die Bohrung selbst.

Die Klemmfederbefestigung hat zudem den Vorteil, daß der Deckel problemlos aus der Bohrung herausgezogen werden kann, z.B. um die Batterie eines Uhrwerkes auszuwechseln.

Die Bedienungselemente, Betätigungsknöpfe od. dgl. des Meßwerkes, insbesondere des Wecherwerkes einer Uhr, sind zweckmäßigerweise verlängert, wobei der Deckel diese Verlängerungen aufnehmende Bohrungen hat, über die die verlängerten Bedienungselemente, Betätigungsknöpfe od. dgl. vorstehen. Das Meßinstrument, z.B. ein Uhrwerk bzw. ein Wecker kann somit ohne Herausnahme des Deckels eingestellt bzw. bedient werden.

Dabei ist es zweckmäßig, wenn die Verlängerungen der Betätigungselemente des jeweiligen Meßwerkes von teleskopartig in ihrer Länge verstellbaren Teilen gebildet sind und an die Dicke des jeweiligen Natursteindeckels in ihrer Länge anpaßbar sind.

Das Meßwerk ist auf diese Weise ohne jeweilige konstruktive Veränderungen in verschieden dicke Natursteine einsetzbar und kann so in Serie produziert werden.

Dabei bieten sich einige Gestaltungsmöglichkeiten als besonders vorteilhaft an.

So ist es z.B. zum Aufbau einer Wettermeßstation vorteilhaft, wenn das Gehäuse zwei oder drei nebeneinanderliegende Bohrungen zur Aufnahme verschiedener Meßwerke, insbesondere eines Thermo-, Hygro- und/oder Barometers aufweist.

Die benötigte Wetterinformation ergibt sich somit in praktischer Weise auf einen Blick.

Zur Unterstützung der schnellen Erfassung der Anzeigewerte können die Achsen der nebeneinanderliegenden Bohrungen hierbei auch mit einem Winkel zur Achse der benachbarten Bohrung von vorzugsweise weniger als 20° in der zur Standfläche parallelen Ebene von der Rückseite des Gehäuses fächerförmig zur Vorderseite des Gehäuses hin vorzugsweise zusammenlaufend angeordnet sein.

Die Achsen der Bohrungen müssen auch nicht in einer Ebene liegen, sondern können auch teilweise übereinander angeordnet sein.

Die Formgebungsmöglichkeiten erweisen sich somit als weit gefächert und den unterschiedlichsten ästhetischen Bedürfnissen anpaßbar.

Die Erfindung betrifft auch ein Verfahren zur Herstellung eines Meßinstrumentes gemäß dem Oberbegriff von Anspruch 17.

Das Verfahren ist dadurch gekennzeichnet, daß ein auf seiner Außenfläche im wesentlichen unbearbeiteter Naturstein durchgehend gebohrt wird, wobei ein Bohrungsbereich der gehäusebohrung zur Aufnahme des bzw, der Meßwerke mit Anzeigefläche und/oder Zifferblatt gleich oder größer ist als die Außenkontur des Meßwerkes und/oder einer Halterung für das Meßwerk.

So kann in einfacher Weise ein Bohrkern gewonnen werden, der wie oben beschrieben, zumindest teilweise als Deckel zum rückwärtigen Verschluß der Uhr benutzt werden kann. Zudem lassen sich in diesem Verfahren Ringbohrer einsetzen, was besonders bei großen Natursteinen von Vorteil ist, weil hierdurch ein wesentlich geringerer Teil des Steines beim Bohrvorgang weggespant werden muß als bei Verwendung gewöhnlicher Fräsbohrer.

Das Verfahren kann dahingehend weiterentwickelt werden, daß zunächst mit einem Ringbohrer ein kreisförmiger Schlitz von der späteren Oberfläche des Gehäuses her eingeschnitten oder eingebohrt wird, dessen Außendurchmesser dem späteren Durchmesser des Bohrungsteiles entspricht, durch welchen das Zifferblatt sichtbar ist, daß anschließend an diesen Ringschlitz zentriert eine Bohrvorrichtung angesetzt wird, die von der gegenüberliegenden Seite her mit etwas größerem Durchmesser durch den Stein gebohrt wird, bis der Bohrungsquerschnitt den Grund des ersten Bohrungsschnittes erreicht, wobei der Durchmesser der zweiten Bohrung größer als der der ersten ist, aber die beiden gebohrten Ringe sich überlappen.

Dieses Verfahren erweist sich als besonders effektiv, weil damit die Stufe, an der die Anzeigefläche bzw. das Zifferblatt der Uhr anliegt, ohne weitere Fräs- oder Schleifmaßnahmen an der Übergangsstelle der beiden Bohrungen praktisch von selbst gebildet wird. Die axiale Lage der Anzeigefläche bzw. des Zifferblattes kann dabei einfach durch Veränderung der jeweiligen Bohrtiefen variiert werden.

Zur Herstellung eines Abschlußdeckels für die Rückseite des Meßwerkes von dem beim Herstellen der durchgehenden Gehäusebohrung anfallenden Bohrkern kann dessen Ende abgetrennt werden. Dies geschieht vorzugsweise in einem Abstand von dem der ursprünglichen rückwärtigen Steinoberfläche entsprechenden Ende des Bohrkernes. Dabei ist das abgetrennte Stück zweckmäßigerweise von einer Dicke, die gleich oder kleiner dem Abstand des eingesetzten Meßwerkes von der rückwärtigen Steinoberfläche ist.

Dadurch ergibt sich durch einfaches Hineinschieben des so abgeschnittenen Teiles des Bohrkernes bis hin zum Anschlag an die Rückseite der Uhr automatisch ein bündiger Abschluß der rückwärtigen Steingehäuseoberfläche. Dadurch, daß der Deckel den gesamten rückwärtigen Hohlraum der Bohrung im Steingehäuse ausfüllt, wird zudem die mögliche Anlagefläche für die Klemmfedern an der Zylinderrandfläche des Deckels so gut wie möglich genutzt, so daß ein sicherer Sitz des Deckels erreicht werden kann.

Auch die Anzeigefläche und/oder das Zifferblatt können auf einfache Weise aus dem jeweiligen Bohrkern gewonnen werden, indem von dem Bohrkern vorzugsweise nach dem Abtrennen des Deckelstückes ein dünner Querschnitt als Anzeige- und/oder Zifferblatt für das eigentliche Meßgerät abgetrennt, insbesondere abgesägt wird.

Nach diesem Verfahren wird somit praktisch kein anderes Material außer dem Stein zur Herstellung des erfindungsgemäßen Meßgerätes benötigt.

Weite Ausgestaltungen der Erfindung ergeben sich aus den Unteransprüchen.

Nachstehend ist die Erfindung mit den ihr als wesentlich zugehörigen Einzelheiten anhand eines Ausführungsbeispieles und der Zeichnung noch näher beschrieben.

Es zeigen:

Fig. 1 Frontansicht einer erfindungsgemäßen Steinuhr,

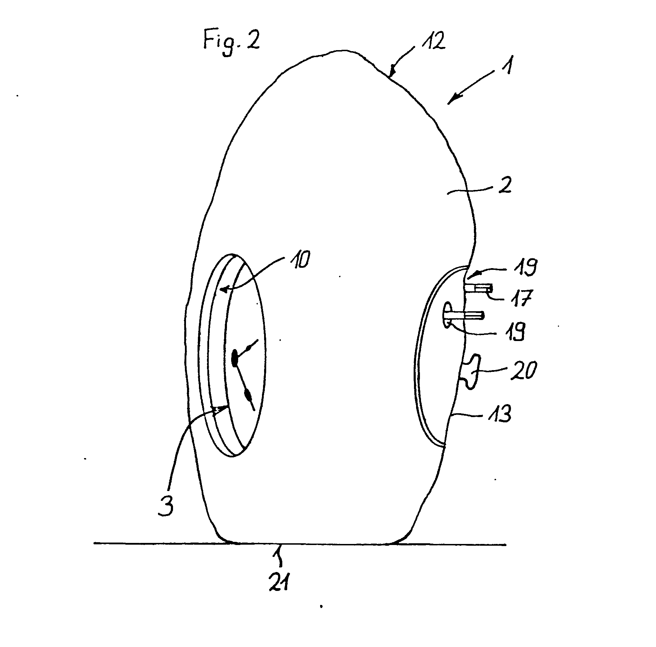

Fig. 2 perspektivische Seitenansicht der Uhr nach Fig. 1,

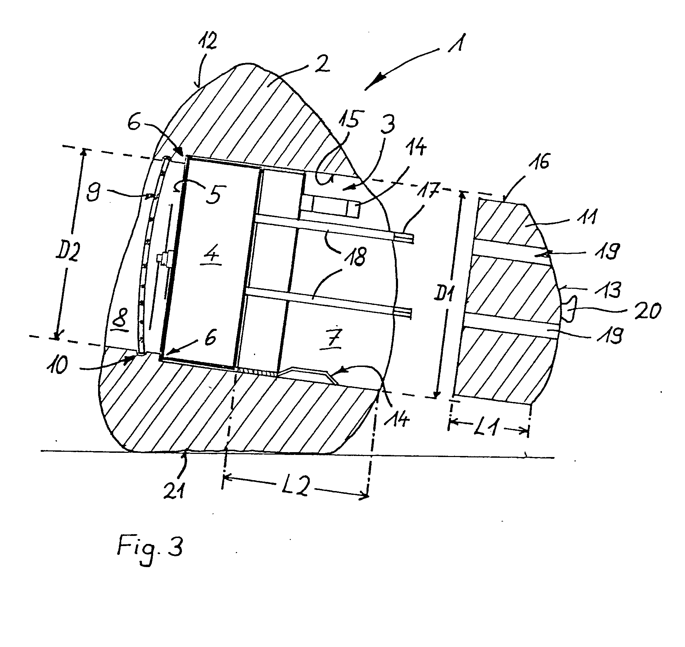

Fig. 3 geschnittene Seitenansicht der Uhr nach Fig. 1,

Fig. 4 Frontansicht einer erfindungsgemäßen Wettermeßstation mit zwei Meßinstrumenten und

Fig. 5 Frontansicht einer erfindungsgemäßen Wettermeßstation mit drei Meßinstrumenten.

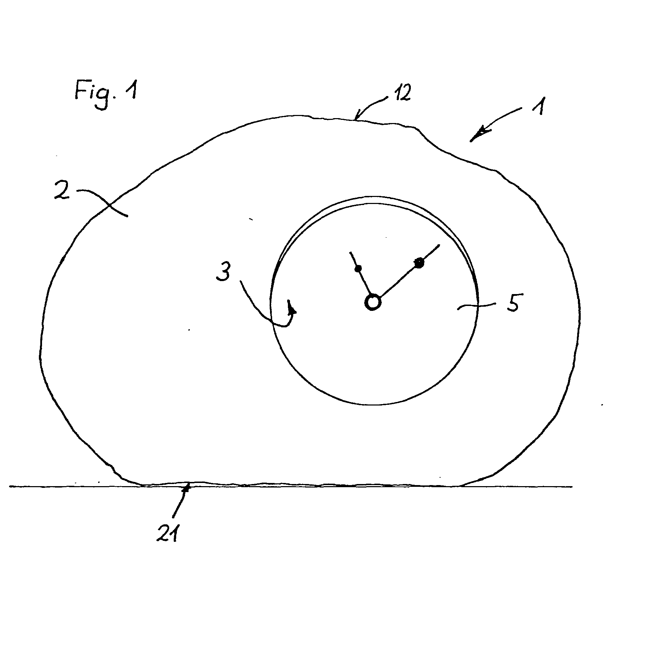

Fig. 1 zeigt eine im ganzen mit 1 bezeichnete Standuhr mit einem Gehäuse aus Naturstein mit durchgehender Bohrung 3. Die Bohrung 3 kann z.B. ein Thermometer 4 a, ein Hygrometer 4 b und/oder ein Barometer, jeweils mit einer Anzeigefläche 5 a aufnehmen. Im Ausführungsbeispiel dient sie zur Aufnahme eines Uhrwerkes 4 mit einer Zifferblatt 5.

Die durchgehende Gehäusebohrung weist eine Stufe 6 auf, an der der größere Bohrungsbereich 7 mit dem Durchmesser D 1 in den vorderen Bohrungsbereich 8 mit dem Durchmesser D 2 übergeht. Das Zifferblatt 5 liegt mit seinem äußeren Rand an dieser Stufe 6 an. In dem vor dem Zifferblatt 5 befindlichen Bohrungsbereich 8 ist ein Schutzglas 9 in einer umlaufenden Nut 10 eingesetzt.

In dem dem Zifferblatt 5 abgewandten Bohrungsbereich 7 befindet sich ein Deckel 11, der von dem bei der Herstellung der durchgehenden Gehäusebohrung 3 anfallenden Bohrkern abgetrennt ist. Dabei ist der Teil des Bohrkernes als Deckel 11 verwendet, der in diesem Bereich der ursprünglichen Steinoberfläche entspricht. Gehäuseoberfläche 12 und Deckelrückenfläche 13 weisen deshalb eine ineinander übergehende Musterung und Struktur auf. Auf die gleiche Weise kann auch der vordere Bereich mit einem abnehmbaren Steindeckel versehen werden.

Zur Befestigung des Uhrwerkes 4 in der Gehäusebohrung 3 ist eine Klemmfeder 14 angebracht, die drei über die Innenwand 15 des rückwärtigen Bohrungsbereiches 7 verteilte Bügel aufweist, die sich an der Innenwand 15 in Richtung der rückwärtigen Deckelöffnung abstützen. Der Deckel 11, der einen geringeren Durchmesser aufweist als der Durchmesser D 1 des Bohrungsbereiches 7 wird nach seinem Einsetzen in die rückwärtige Öffnung somit durch die Klemmfeder mit einem gewissen Abstand seines Führungsrandes 16 zur Innenwand 16 des rückwärtigen Bohrungsbereiches 7 gehalten. Der Abstand zwischen Innenwand 15 und Führungsrand 16 des Deckels 11 bildet damit um den Umfang des Deckels 11 einen freibleibenden Ring, der als Schallaustritt für ein Weckersignal dient.

Die Betätigungsknöpfe 17 des Uhrwerkes 4 werden durch Verlängerungen 18 durch die Bohrungen 19 des Deckels 11 aus dessen Rückenfläche 13 herausgeführt, so daß der Wecker auch bei eingesetztem Deckel bedient werden kann.

Diese Verlängerungen 18 sind teleskopartig in ihrer Länge verstellbar und somit an die Decke des jeweiligen Natursteindeckels 11 anpaßbar.

Um der Uhr 1 das Aussehen einer "reinen Steinuhr" zu geben, besteht das Zifferblatt aus einer abgetrennten Querschnittsscheibe des Bohrkernes.

Das Herausnehmen des Deckels 11 aus seiner Klemmfederverankerung wird durch einen Griff 20 erleichtert, der an der Deckelrückenfläche 13 angebracht ist.

Um der Uhr einen sicheren Stand zu ermöglichen, ist die die Standfläche 21 bildende Seite des Natursteines abgeschliffen und/oder abgesägt.

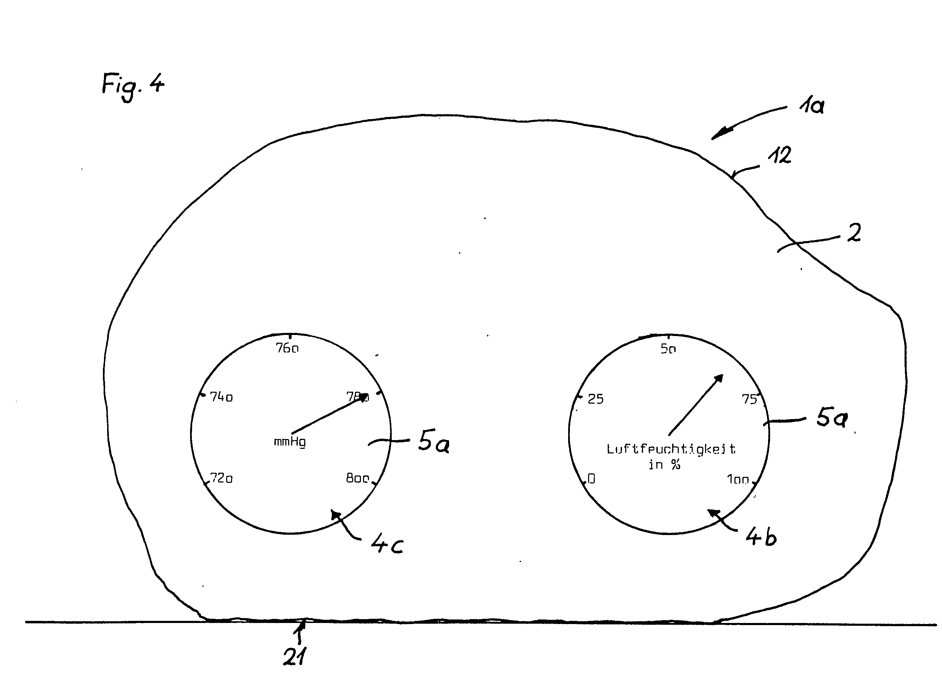

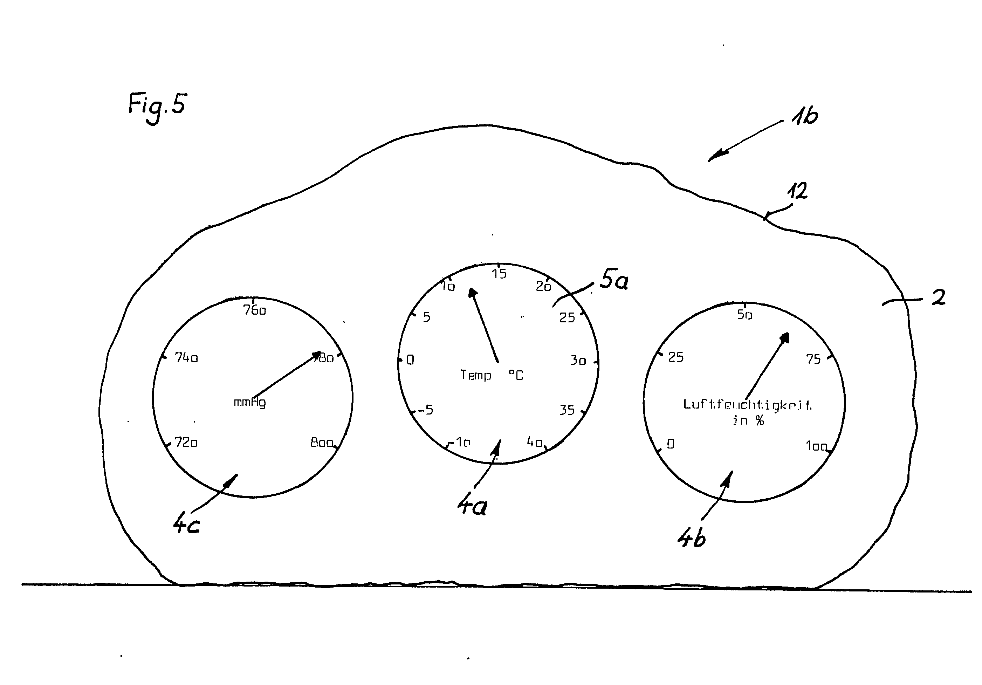

Die Fig. 4 und 5 zeigen erfindungsgemäße Wettermeßstationen, die zwei verschiedene Ausführungsformen unterschiedlich anordbarer Meßinstrumente darstellen. Die jeweilige Bohrungsanordnung ist im wesentlichen die gleiche wie bei der vorstehend beschriebenen erfindungsgemäßen Steinuhr. Die Anzeigefläche 5 a kann trationell als analog anzeigendes Zifferblatt oder als Digitalanzeige ausgeführt sein. Möglich ist auch eine Kombination von Meßwerken 4 und Anzeigen mehrerer Meßwerke 4 in einer Bohrung, beispielsweise eines Barometers 4 c und eines Thermometers 4 a. Hierbei kann auch die Digitalanzeige mit einem analog anzeigenden Zifferblatt kombiniert werden.

Bei den in Fig. 4 und 5 dargestellten Wettermeßstationen 1 a und 1 b liegen die Achsen der Bohrungen 3 parallel zueinander. Die Bohrungen 3 können z.B. aber auch von der Rückseite des Gehäuses 2 fächerförmig zur Vorderseite des Gehäuses 2 hin auseinander- oder zusammenlaufen.

Neben den hier gezeigten Ausführungsbeispielen können die Achsen auch teilweise übereinander angeordnet sein, z.B. so, daß sich in der Frontansicht ein "Anzeigedreieck" gibt (vgl. Fig. 5).

Zur Herstellung des Meßinstrumentes wird zunächst an der Seite, an der sich später das oder die Anzeigeflächen 5 a bzw. Zifferblätter 5 befinden sollen, mit einem Ringbohrer an den dafür vorgesehenen Stellen jeweils ein kreisförmiger Schlitz in die Oberfläche des Steines geschnitten bzw. gebohrt. Der Außendurchmesser dieses kreisförmigen Schlitzes entspricht dabei dem späteren Durchmesser des jeweiligen Bohrungsbereiches 8, durch welchen die jeweilige Anzeigenfläche bzw. das jeweilige Zifferblatt sichtbar sein soll. Sodann wird die Bohrung 8 von der axial gegenüberliegenden Seite des Steines durchgeführt. Die rückwärtige Bohrung verläuft dabei exakt in der gleichen Achse wie die Bohrung auf der späteren Anzeigeflächen- bzw. Zifferblattseite. Rückwärtig wird jedoch mit einem etwas größeren Durchmesser durch den Stein gebohrt, so daß sich beim Aufeinandertreffen von rückwärtigem und vorderseitigem Bohrungsschlitz als Übergang beider Bohrungsbereiche 7 und 8 eine Stufe bildet und der Bohrkern zur Rückseite hin herausnehmbar ist. Zu diesem Zweck sind die Bohrungsdurchmesser so gewählt, daß sich die beiden gebohrten Ringe gegenseitig überlappen. Vom Bohrkern können in einfacher Weise der Deckel 11 sowie das Zifferblatt 5 abgesägt werden.

Bei der Verwendung von natürlich abgeschliffenen Kieselsteinen kann auf eine weitere Bearbeitung der Gehäuse-, das heißt Natursteinoberfläche, völlig verzichtet werden. Hierin liegt auch ein nicht unwesentlicher ökonomisch sich auswirkender Vorteil der Erfindung.

**Patentansprüche**

1. Meßinstrument (1), insbesondere zur Messung von Zeit, Luftdruck, Luftfeuchtigkeit und/oder Temperatur mit einem Gehäuse (2) und zumindest einer Anzeigefläche (5a) und/oder Zifferblatt (5) und zumindest einem z.B. aus einem Uhrwerk bestehendem Meßwerk (4), welches an der der Anzeigefläche (5a) bzw. dem Zifferblatt (5) abgewandten Gehäuserückseite vorzugsweise für das Einstellen des Meßwerkes (4) oder eines hiervon gesteuerten Zusatzgerätes, insbesondere eines Warn- oder sonstigen sekundären Anzeigegerätes, wie z.B. eines Weckerwerkes, od. für dgl. Betätigungen zugänglich ist, dadurch gekennzeichnet, daß das Gehäuse (2) durch einen auf seiner Außenfläche im wesentlichen unbearbeiteten Naturstein gebildet ist, der zumindest eine durchgehende Gehäusebohrung (3) zur Aufnahme des bzw. der Meßwerke mit Anzeigefläche (5a) und/oder Zifferblatt (5) hat.

2. Meßinstrument nach Anspruch 1, dadurch gekennzeichnet, daß die durchgehende Gehäusebohrung (3) abgestuft ist und der im Durchmesser (D1) größere Bohrungsbereich (7) das Meßwerk (4) mit der Anzeigefläche (5a) und/oder dem Zifferblatt (5) aufnimmt und die Anzeigefläche (5a) und/oder das Zifferblatt (5) an der Stufe (6) zu dem Bohrungsbereich (8) mit dem kleineren Durchmesser (D2) anliegt.

3. Meßinstrument nach Anspruch 1 oder 2, dadurch gekennzeichnet, daß die Gehäusebohrung (3) in dem vor der Anzeigefläche (5a) und/oder Zifferblatt (5) befindlichen Bereich eine umlaufende Nut (10) od. dgl. zum Einsetzen eines Schutzglases (9) hat.

4. Meßinstrument nach einem der Ansprüche 1 bis 3, dadurch gekennzeichnet, daß zumindest für den von der Anzeigefläche (5a) und/oder dem Zifferblatt (5) abgewandten Bohrungsbereich (7) ein Deckel (11) vorgesehen ist, der von dem bei der Herstellung der durchgehenden Gehäusebohrung (3) anfallenden Bohrkern abgetrennt ist, wobei vorzugsweise der Teil des Bohrkernes als Deckel (11) verwendet wird, der in diesem Bereich der ursprünglichen Steinoberfläche entspricht.

5. Meßinstrument nach einem der Ansprüche 1 bis 4, dadurch gekennzeichnet, daß zwischen dem Rand (16) des Steindeckels (11) und der Gehäusebohrung (3) ein Ring od. dgl. Öffnung als Schallaustritt für ein Weckerwerk freibleibt.

6. Meßinstrument nach einem der Ansprüche 1 bis 5, dadurch gekennzeichnet, daß zur Fixierung des Meßwerkes (4) in der Gehäusebohrung (3) eine Klemmfeder (14) od. dgl. vorgesehen ist, die vorzugsweise auf der der Anzeigefläche (5a) und/oder dem Zifferblatt (5) abgewandten Seite verlängert ist und einen Einsatz für den Steindeckel (11) bildet.

7. Meßinstrument nach einem der Ansprüche 1 bis 6, dadurch gekennzeichnet, daß die Betätigungsknöpfe (17) und dgl. des Meßwerkes (4), vorzugsweise auch des Weckerwerkes der Uhr, verlängert sind und der Deckel (11) diese Verlängerungen (18) aufnehmende Bohrungen (19) hat, über die die verlängerten Betätigungsknöpfe (17) od. dgl. vorstehen.

8. Meßinstrument nach einem der Ansprüche 1 bis 7, dadurch gekennzeichnet, daß die Verlängerungen der Betätigungselemente (17) des Meßwerkes (4) von teleskopartig in ihrer Länge verstellbaren Teilen gebildet sind und an die Dicke des jeweiligen Natursteindeckels (11) in ihrer Länge anpaßbar sind.

9. Meßinstrument nacheinem der Ansprüche 1 bis 8, dadurch gekennzeichnet, daß die Anzeigefläche (5a) und/oder das Zifferblatt (5) als Querschnitt des Bohrkernes von diesem abgetrennt ist.

10. Meßinstrument nach einem der Ansprüche 1 bis 9, dadurch gekennzeichnet, daß die Klemmfeder (14) für das Meßwerk (4) und/oder den Steindeckel (11) aus Metall und/oder Kunststoff besteht.

11. Meßinstrument nach einem der Ansprüche 1 bis 10, dadurch gekennzeichnet, daß der Steindeckel (11) auf seiner rückwärtigen Außenseite (13) einen an ihm befestigten, vorzugsweise eingelassenen vorstehenden Handgriff (20) hat.

12. Meßinstrument nach einem der Ansprüche 1 bis 11, dadurch gekennzeichnet, daß die die Standfläche (21) bildende Seite des Natursteines zur Vergrößerung der Auflagestellen abgeschliffen und/oder abgesägt ist.

13. Meßinstrument nach einem der Ansprüche 1 bis 12, dadurch gekennzeichnet, daß das Gehäuse (2) wenigstens zwei nebeneinanderliegende Bohrungen (3) zur Aufnahme vorzugsweise verschiedener Meßwerke (4a, 4b, 4c), insbesondere eines Thermo- (4a), Hygro- (4b) und/ oder Barometers (4c) aufweist.

14. Meßinstrument nach einem der Ansprüche 1 bis 13, dadurch gekennzeichnet, daß die Achsen der nebeneinander liegenden Bohrungen mit einem Winkel zur Achse der benachbarten Bohrung von vorzugsweise weniger als 20° in der zur Standfläche (21) parallelen Ebene fächerförmig auseinanderlaufend sind.

15. Meßinstrument nach einem der Ansprüche 1 bis 14, dadurch gekennzeichnet, daß das Gehäuse wenigstens zwei übereinanderliegende Bohrungen (3) zur Aufnahme vorzugsweise verschiedener Meßwerke (4a, 4b, 4c), insbesondere eines Thermo- (4a), Hygro- (4b) und/oder Barometers (4c) aufweist.

16. Meßinstrument nach einem der Ansprüche 1 bis 15, dadurch gekennzeichnet, daß das Gehäuse (2) wenigstens drei Bohrungen aufweist, durch deren Achsen jeweils verschiedene Ebenen aufgespannt sind.

17. Verfahren zur Herstellung eines Meßinstrumentes (1), insbesondere zur Messung von Zeit, Luftdruck, Luftfeuchtigkeit und/oder Temperatur mit einem Steingehäuse (2) und zumindest einer Anzeigefläche (5a) und/oder Zifferblatt (5) und zumindest einem z.B. aus einem Uhrwerk bestehendem Meßwerk (4), welches an der der Anzeigefläche (5a) bzw. dem Zifferblatt (5) abgewandten Gehäuserückseite vorzugsweise für das Einstellen des Meßwerkes (4) oder eines hiervon gesteuerten Zusatzgerätes, insbesondere eines Warn- oder sonstigen sekundären Anzeigegerätes, wie z.B. eines Weckerwerkes, od. für dgl. Betätigungen zugänglich ist, dadurch gekennzeichnet, daß ein auf seiner Außenfläche im wesentlichen unbearbeiteter Naturstein durchgehend gebohrt wird, wobei ein Bohrungsbereich (7) der Gehäusebohrung (3) zur Aufnahme des bzw. der Meßwerke mit Anzeigefläche (5a) und/ oder Zifferblatt (5) gleich oder größer ist als die Außenkontur des Meßwerkes (4) und/oder eine Halterung für das Meßwerk (4).

18. Verfahren nach Anspruch 17, dadurch gekennzeichnet, daß zunächst mit einem Ringbohrer ein kreisförmiger Schlitz von den späteren Oberfläche des Gehäuses (2) her eingeschnitten oder eingebohrt wird, dessen Außendurchmesser (D2) dem späteren Durchmesser des Bohrungsteiles (8) entspricht, durch welche die Anzeigefläche (5a) und/oder das Zifferblatt (5) sichtbar ist, daß anschließend an diesen Ringschlitz zentriert eine Bohrvorrichtung angesetzt wird, die von der gegenüberliegenden Rückseite her mit etwas größerem Durchmesser (D1) durch den Stein gebohrt wird, bis der Bohrungsschnitt den Grund des ersten Bohrungsschnittes erreicht, wobei der Durchmesser (D1) der zweiten Bohrung (7) größer als der der ersten ist, aber die beiden gebohrten Ringe sich überlappen.

19. Verfahren nach Anspruch 17 oder 18, dadurch gekennzeichnet, daß zur Herstellung eines Abschlußdeckels (11) für die Rückseite des Meßwerkes (4) von dem beim Herstellen der durchgehenden Gehäusebohrung (3) anfallenden Bohrkern dessen Ende in einem Abstand von dem der ursprünglichen rückwärtigen Steinoberfläche entsprechenden Ende des Bohrkernes abgetrennt wird, so daß das abgetrennte Stück in seiner Dicke (L1) gleich oder kleiner dem Abstand (L2) des eingesetzten Meßwerkes (4) von der rückwärtigen Steinoberfläche ist.

20. Verfahren nach einem der Ansprüche 17 bis 19, dadurch gekennzeichnet, daß von dem jeweiligen Bohrkern vorzugweise nach dem Abtrennen des Deckelstückes ein dünner Qereschnitt als Anzeigefläche (5a) und/oder als Zifferblatt (5) für das eigentliche Meßinstrument (1) abgetrennt, insbesondere abgesägt wird.

21. Meßinstrument nach einem der Ansprüche 1 bis 16, dadurch gekennzeichnet, daß als Natursteine große Kieselsteine vorgesehen sind.

**Revendications**

1. Instrument de mesure (1), en particulier pour la mesure du temps, de la pression atmosphérique, de l'humidité atmosphérique et/ou de la température, comportant un boîtier (2) et au moins une surface d'affichage (5a) et/ou un cadran (5) et au moins un mouvement de mesure (4) constitué d'un mouvement d'horloge, auquel on a accès par la face arrière du boîtier, opposée à la surface d'affichage (5a) ou au cadran (5), de préférence pour régler le mouvement de mesure (4) ou un appareil supplémentaire commandé par celui-ci, en particulier un appareil de signalisation ou un autre appareil d'affichage secondaire tel qu'un mouvement de réveil, ou pour des commandes similaires, caractérisé en ce que le boîtier (2) est formé par une pierre naturelle, pratiquement non usinée sur sa face extérieure, qui présente au moins un perçage de boîtier (3) débouchant, destiné à recevoir le ou les mouvement(s) de mesure avec surface d'affichage (5a) et/ou cadran (5).

2. Instrument de mesure selon la revendication 1, caractérisé en ce que le perçage de boîtier (3) débouchant est étagé et en ce que la région du perçage (7) de plus grand diamètre (D1) reçoit le mouvement de mesure (4) avec la surface d'affichage (5a) et/ou le cadran (5) et en ce que la surface d'affichage (5a) et/ou le cadran (5) s'applique contre le palier (6) menant à la région de perçage (8) de plus petit diamètre (D2).

3. Instrument de mesure selon la revendication 1 ou 2, caractérisé en ce que le perçage de boîtier (3) présente, dans la région se trouvant devant la surface d'affichage (5a) et/ou le cadran (5), une rainure continue (10) ou similaire pour la mise en place d'un verre de protection (9).

4. Instrument de mesure selon l'une quelconque des revendications 1 à 3, caractérisé en ce qu'on prévoit, au moins pour la région de perçage (7), opposée à la surface d'affichage (5a) et/ou au cadran (5), un couvercle (11) qui est séparé de la carotte, formée lors de la fabrication du perçage de boîtier (3) débouchant, la partie de la carotte qui, dans cette région, correspond à la surface d'origine de la pierre, étant de préférence utilisée comme couvercle (11).

5. Instrument de mesure selon l'une quelconque des revendications 1 à 4, caractérisé en ce qu'il reste entre le bord (16) du couvercle en pierre (11) et le perçage de boîtier (3), un anneau ou une ouverture similaire servant à la sortie du son d'un réveil.

6. Instrument de mesure selon l'une quelconque des revendications 1 à 5, caractérisé en ce que pour fixer le mouvement de mesure (4) dans le perçage de boîtier (3), on prévoit un ressort de serrage (14) ou similaire qui est de préférence prolongé sur le côté opposé à la surface d'affichage (5a) et/ou cadran (5) et forme une monture pour le couvercle en pierre (11).

7. Instrument de mesure selon l'une quelconque des revendications 1 à 6, caractérisé en ce que les boutons de commande (17) et similaires du mouvement de mesure (4), de préférence aussi du mouvement de réveil de l'horloge, sont prolongés et en ce que le couvercle (11) présente des perçages (19) recevant ces prolongements (18) et d'où ressortent les boutons de commande (17) prolongés ou similaires.

8. Instrument de mesure selon l'une quelconque des revendications 1 à 7, caractérisé en ce que les prolongement des éléments de commande (17) du mouvement de mesure (4) sont formés par des éléments télescopiques de longueur réglable et dont la longueur peut s'adapter à l'épaisseur du couvercle (11) en pierre naturelle.

9. Instrument de mesure selon l'une quelconque des revendications 1 à 8, caractérisé en ce que la surface d'affichage (5a) et/ou le cadran (5) est séparé du noyau de perçage, sous la forme d'une section transversale de celui-ci.

10. Instrument de mesure selon l'une quelconque des revendications 1 à 9, caractérisé en ce que le ressort de serrage (14) destiné au mouvement de mesure (4) et/ou au couvercle en pierre (11), est en métal et/ou en matière plastique.

11. Instrument de mesure selon l'une quelconque des revendications 1 à 10, caractérisé en ce que le couvercle en pierre (11) présente, sur sa face extérieure (13) arrière, une poignée (20) fixée sur le couvercle, de préférence encastrée et ressortant de celui-ci.

12. Instrument de mesure selon l'une quelconque des revendications 1 à 11, caractérisé en ce que la face de la pierre naturelle, formant la surface d'appui (21), est polie et/ou sciée pour élargir les points d'appui.

13. Instrument de mesure selon l'une quelconque des revendications 1 à 12, caractérisé en ce que le boîtier (2) présente au moins deux perçages (3) disposés côte à côte, destinés à recevoir de préférence des mouvements de mesure (4a, 4b, 4c) différents, en particulier d'un thermomètre (4a), d'un hygromètre (4b) et/ou d'un baromètre (4c).

14. Instrument de mesure selon l'une quelconque des revendications 1 à 13, caractérisé en ce que les axes des perçages situés côte à côte s'écartent en éventail, en formant un angle de préférence inférieur à 20°, par rapport à l'axe du perçage voisin, dans le plan parallèle à la surface d'appui (21).

15. Instrument de mesure selon l'une quelconque des revendications 1 à 14, caractérisé en ce que le boîtier présente au moins deux perçages (3) superposés, destinés à recevoir des mouvements de mesure (4a, 4b, 4c), de préférence différents, en particulier d'un thermomètre (4a), d'un hygromètre (4b) et/ou d'un baromètre (4c).

16. Instrument de mesure selon l'une quelconque des revendications 1 à 15, caractérisé en ce que le boîtier (2) présente au moins trois perçages par les axes desquels passent différents plans.

17. Procédé de fabrication d'un instrument de mesure (1), en particulier pour la mesure du temps, de la pression atmosphérique, de l'humidité atmosphérique et/ou de la température, comportant un boîtier (2) et au moins une surface d'affichage (5a) et/ou un cadran (5) et au moins un mouvement de mesure (4) constitué d'un mouvement d'horloge, auquel on a accès par la face arrière du boîtier, opposée à la surface d'affichage (5a) ou au cadran (5), de préférence pour régler le mouvement de mesure (4) ou un appareil supplémentaire commandé par celui-ci, en particulier un appareil de signalisation ou un autre appareil d'affichage secondaire tel qu'un mouvement de réveil, ou pour des commandes similaires, caractérisé en ce qu'on perce, de part en part, une pierre naturelle, pratiquement non usinée sur sa face extérieure, une région (7) du perçage de boîtier (3), destinée à recevoir le ou les mouvement(s) de mesure avec surface d'affichage (5a) et/ou cadran (5), étant égale ou supérieure au contour extérieur du mouvement de mesure (4) et/ou à une monture pour le mouvement de mesure (4).

18. Procédé selon la revendication 17, caractérisé en ce qu'on entaille ou perce tout d'abord, avec un foret annulaire, à partir de la future surface du boîtier (2), une fente circulaire dont le diamètre extérieur (D2) correspond au diamètre futur de la partie de perçage (8) à travers laquelle la surface d'affichage (5a) et/ou le cadran (5) est visibible, en ce qu'on place ensuite un dispositif de perçage, centré sur cette fente annulaire, qui, à partir de la face arrière opposée, perce un trou à travers la pierre, de diamètre (D1) légèrement plus grand, jusqu'à ce que le perçage atteigne le fond du premier perçage, le diamètre (D1) du deuxième perçage (7) étant supérieur à celui du premier, mais les deux anneaux percés se recouvrant.

19. Procédé selon la revendication 17 ou 18, caractérisé en ce que pour réaliser un couvercle de fermeture (11) de la face arrière du mouvement de mesure (4), on sépare de la carotte formée lors de la réalisation du perçage de boîtier (3) débouchant, l'extrémité de celle-ci, à une certaine distance de l'extrémité de la carotte, correspondant à la surface arrière initiale de la pierre, de manière que la pièce sectionnée ait une épaisseur (L1) égale ou inférieure à la distance (L2) séparant le mouvement de mesure (4), mis en place, de la surface arrière de la pierre.

20. Procédé selon l'une quelconque des revendications 17 à 19, caractérisé en ce qu'on sectionne de la carotte concernée, en particulier par sciage, de préférence après sectionnement de la pièce de couvercle, une section transversale mince pour servir de surface d'affichage (5a) et/ou de cadran (5) pour l'instrument de mesure (1) proprement dit.

21. Instrument de mesure selon l'une quelconque des revendications 1 à 16, caractérisé en ce qu'on utilise comme pierres naturelles de gros galets.

## Claims

1. A measuring apparatus (1), in particular for measuring time, atmospheric pressure, atmospheric humidity and/or temperature, including a casing (2) and at least one indicating face (5a) and/or dial (5) and at least one measuring unit (4) consisting, for example, of a clockwork, at the rear of the casing averted from the indicating face (5a) and/or dial (5) said measuring unit (4) being accessible preferably for setting it or for setting an ancillary unit controlled thereby, in particular a warning device or other secondary indicator such as an alarm mechanism, or for suchlike operations, characterized in that the casing (2) is formed by a natural stone which is essentially untooled on the outer surface thereof and has at least one through bore (3) in the casing for receiving the measuring unit(s) with indicating face (5a) and/or dial (5).

2. The measuring apparatus as claimed in claim 1, characterized in that the through bore (3) in the casing is stepped and that zone (7) of the bore which is larger in diameter (D1) receives the measuring unit (4) with the indicating face (5a) and/or dial (5), and the indicating face (5a) and/or dial (5) rests against the step (6) to that zone (8) of the bore which is of smaller diameter (D2).

3. The measuring apparatus as claimed in claim 1 or claim 2, characterized in that in the zone situated in front of the indicating face (5a) and/or dial (5) the bore (3) in the casing has a circumferential groove (10) or the like for putting in a protective glass (9).

4. The measuring apparatus as claimed in any one of claims 1 to 3, characterized in that a cap (11) is provided at least for that zone (7) of the bore which is averted from the indicating face (5a) and/or dial (5), said cap being separated from the core obtained in making the through bore (3) in the casing, the part of the core corresponding to the original surface of the stone in said zone preferably being used as the cap (11).

5. The measuring apparatus as claimed in any one of claims 1 to 4, characterized in that a ring or suchlike opening as a sound outlet for an alarm mechanism remains free between the edge (16) of the stone cap (11) and the bore (3) in the casing.

6. The measuring apparatus as claimed in any one of claims 1 to 5, characterized in that a clamping spring (14) or the like is provided to fix the measuring unit (4) in the bore (3) of the casing, said clamping spring preferably being extended on the side averted from the indicating face (5a) and/or dial (5) and composing a socket for the stone cap (11).

7. The measuring apparatus as claimed in any one of claims 1 to 6, characterized in that the control knobs (17) and the like of the measuring unit (4), preferably also of the alarm mechanism of the clock, are extended and the cap (11) has bores (19) receiving said extensions (18), the extended control knobs (17) or the like projecting beyond said bores.

8. The measuring apparatus as claimed in any one of claims 1 to 7, characterized in that the extensions of the control elements (17) of the measuring unit (4) are composed by parts telescopically adjustable in their length and are adaptable in their length to the thickness of the respective natural stone cap (11).

9. The measuring apparatus as claimed in any one of claims 1 to 8, characterized in that the indicating face (5a) and/or dial (5) is separated from the core as a crosscut of the latter.

10. The measuring apparatus as claimed in any one of claims 1 to 9, characterized in that the clamping spring (14) for the measuring unit (4) and/or stone cap (11) consists of metal and/or plastics.

11. The measuring apparatus as claimed in any one of claims 1 to 10, characterized in that the stone cap (11) has on the outside (13) thereof at the back a handle (20) attached thereto, preferably an inset, projecting one.

12. The measuring apparatus as claimed in any one of claims 1 to 11, characterized in that the side of the natural stone forming the base (21) is grounded off and/or sawn off to enlarge the points of support.

13. The measuring apparatus as claimed in any one of claims 1 to 12, characterized in that the casing (2) has at least two bores (3) lying side by side to receive measuring units (4a, 4b, 4c), preferably different ones, in particular a thermometer (4a), hygrometer (4b) and/or barometer (4c).

14. The measuring apparatus as claimed in any one of claims 1 to 13, characterized in that in the plane parallel to the base (21) the axes of the bores lying side by side are divergent fanwise at an angle of preferably less than 20° to the axis of the adjacent bore.

15. The measuring apparatus as claimed in any one of claims 1 to 14, characterized in that the casing has at least two superposed bores (3) to receive measuring units (4a, 4b, 4c), preferably different ones, in particular a thermometer (4a), hygrometer (4b) and/or barometer (4c).

16. The measuring apparatus as claimed in any one of claims 1 to 15, characterized in that the casing (2) has at least three bores, the axes of which in each case set different planes.

17. A method for the fabrication of a measuring apparatus (1), in particular for measuring time, atmospheric pressure, atmospheric humidity and/or temperature, including a stone casing (2) and at least one indicating face (5a) and/or dial (5) and at least one measuring unit (4) consisting, for example, of a clockwork, at the rear of the casing averted from the indicating face (5a) and/or dial (5) said measuring unit (4) being accessible preferably for setting it or for setting an ancillary unit controlled thereby, in particular a warning device or other secondary indicator such as an alarm mechanism, or for suchlike operations, characterized in that a through bore is made in a natural stone essentially untooled on the outer surface thereof, one zone (7) of the bore (3) situated in the casing and serving to receive the measuring unit(s) with indicating face (5a) and/or dial (5) being equal to or larger than the outer contour of the measuring unit (4) and/or a holder for the measuring unit (4).

18. The method as claimed in claim 17, characterized in that first a circular slot is cut or drilled by an annular bit from the later surface of the casing (2), the outer diameter (D2) of said slot corresponding to the later diameter of that zone (8) of the bore through which the indicating face (5a) and/or dial (5) is visible, that then a drilling device centered on said circular slot is applied and is drilled with a somewhat larger diameter (D1) from the opposite rear side through the stone until the cut of the bore reaches the bottom of the first cut, the diameter (D1) of the second bore (7) being larger than that of the first one, but the two bored rings overlapping.

19. The method as claimed in claim 17 or claim 18, characterized in that for a cap (11) for the back of the measuring unit (4) to be produced from the core obtained when making the through bore (3) in the casing, the end of said core is separated at a distance from the end thereof corresponding to the original rear surface of the stone, so that the thickness (L1) of the separated piece is equal to or smaller than the distance (L2) of the inserted measuring unit (4) from the rear surface of the stone.

20. The method as claimed in any one of claims 17 to 19, characterized in that a thin crosscut as an indicating face (5a) and/or as a dial (5) for the measuring apparatus (1) proper is separated, in particular sawn off the respective core, preferably after separation of the cap piece.

21. The measuring apparatus as claimed in any one of claims 1 to 16, characterized in that large pebble stones are provided as the natural stones.

Fig. 1

Fig. 2

Fig. 3

Fig. 4

1a

12

2

760

740          780

mmHg

720          800

5a

4c

5o

25          75

Luftfeuchtigkeit
in %

0          100

5a

4b

21

EP 0 265 557 B1

Fig.5